(19) Europäisches Patentamt

European Patent Office

Office européen des brevets

(11) Veröffentlichungsnummer : **0 363 865 B1**

## (12) EUROPÄISCHE PATENTSCHRIFT

(45) Veröffentlichungstag der Patentschrift :
**15.01.92 Patentblatt 92/03**

(21) Anmeldenummer : **89118696.7**

(22) Anmeldetag : **07.10.89**

(51) Int. Cl.⁵ : **B01F 3/04**

(54) Belüftungseinrichtung.

(30) Priorität : **08.10.88 DE 3834317**
**09.06.89 DE 3918907**

(43) Veröffentlichungstag der Anmeldung :
**18.04.90 Patentblatt 90/16**

(45) Bekanntmachung des Hinweises auf die
Patenterteilung :
**15.01.92 Patentblatt 92/03**

(84) Benannte Vertragsstaaten :
**AT BE CH DE ES FR GB IT LI NL SE**

(56) Entgegenhaltungen :
**EP-A- 0 028 728**
**EP-A- 0 171 452**
**EP-A- 0 229 386**
**CH-A- 532 950**
**DE-A- 3 636 274**
**DE-A- 3 709 910**
**DE-U- 8 714 502**

(56) Entgegenhaltungen :
**FR-A- 1 044 737**
**FR-A- 2 243 157**
**US-A- 4 029 581**
**PATENT ABSTRACTS OF JAPAN, Band 10, Nr.
148 (C-350)[2205], 29. Mai 1986; & JP-A-61 8120
(GOMU)**
**PATENT ABSTRACTS OF JAPAN, Band 10, Nr.
148 (C-350)[2205], 29. Mai 1986; & JP-A-61 8121
(GOMU)**

(73) Patentinhaber : **ENVICON Luft- und
Wassertechnik GmbH & Co. KG
Bassfeldshof 2-4
W-4220 Dinslaken (DE)**

(72) Erfinder : **Bassfeld, Hans-Joachim
Brüner Landstrasse 308
W-4230 Wesel (DE)**

(74) Vertreter : **Becker, Thomas, Dr. et al
Becker & Müller Patentanwälte
Eisenhüttenstrasse 2
W-4030 Ratingen 1 (DE)**

EP 0 363 865 B1

## Beschreibung

Die Erfindung betrifft eine Belüftungseinrichtung zum Eindüsen eines Gases in eine Flüssigkeit, insbesondere in ein zu behandelndes Abwasser. Derartige Belüftungselemente dienen unter anderem zur Frischhaltebelüftung von Abwasser, zum Luft-/Sauerstoffeintrag in Belebungsbecken oder zur Schlammstabilisation, zur Belüftung von Flüssen, Seen und Fischteichen aber auch zum Beispiel zur Neutralisation von Flüssigkeiten durch eine Begasung mit Kohlendioxid.

Derartige Belüftungselemente sind im wesentlichen in zwei Ausführungsformen bekannt, als Rohr- und als sogenannte Flächen- oder Scheibenbelüfter. Die Erfindung beschäftigt sich mit der letztgenannten Gruppe.

Aus der DE-A-3636274 ist eine Belüftungsvorrichtung bekannt, bei der Luft über ein Rohr in einen scheibenartigen Aufsatz eingedüst wird. Der Aufsatz besteht aus einer Metallscheibe und einer darauf angeordneten Gummiplatte, die an verschiedenen Stellen auf die Metallplatte unter Bildung von Belüftungskammern aufvulkanisiert ist. Die Luft durchströmt diese Kammern und tritt über Öffnungen in der Gummiplatte aus.

In der DE-C-3410267 wird ein Scheibenbelüfter beschrieben, bestehend aus einem Grundkörper mit mindestens einer Gasdurchtrittsöffnung sowie einer den Grundkörper abdeckenden und am Grundkörper befestigten gasdurchlässigen Membran, wobei im Bereich der Gasdurchtrittsöffnung eine Vorrichtung zur Begrenzung der Ausformung der Membran im Begasungsfall angeordnet ist, die mit ihrem einen Ende an der Membran befestigt ist und mit ihrem anderen Ende an einem im Bereich der Durchtrittsöffnung angeordneten Gegenstück zusammenwirkt.

Mit einer solchen Vorrichtung soll die Membran im Bereich der Gaszuführung "niedergehalten" werden, wodurch eine gleichmäßigere Begasungsintensität angestrebt wird.

Es ist offensichtlich, daß die bekannte "Hubbegrenzungseinrichtung" relativ kompliziert aufgebaut ist und vor allen Dingen auch einen nicht unerheblichen Teil der Begasungsfläche der Membran wegnimmt, und zwar insbesondere in dem Bereich, in dem normalerweise die höchste Begasungsintensität erreicht wird.

Ziel der vorliegenden Erfindung ist es, eine gattungsgemäße Belüftungseinrichtung so auszubilden, daß sie bezüglich der Begasungsintensität und -vergleichmäßigung über die Begasungsfläche optimiert wird. Dabei soll die Belüftungseinrichtung vorzugsweise einfach aufgebaut und so gestaltet sein, daß auch bekannte Begasungseinrichtungen nachgerüstet werden können.

Zur Lösung der gestellten Aufgabe macht sich die Erfindung folgende Erkenntnis zunutze : Es wurde festgestellt, daß eine optimale Begasungsintensität und -gleichmäßigkeit insbesondere in den Abschnitten der gaspermeablen Membran erreicht werden kann, in denen die Membran den größten Krümmungswinkel aufweist. Dies gilt insbesondere für perforierte Membranen. Bei einer solchen Membran öffnen sich die einzelnen Perforationsöffnungen nämlich erst unter einem bestimmten Krümmungswinkel, während sie im undeformierten Zustand praktisch geschlossen sind. Eine solche Ausführungsform einer Membran ist deshalb bevorzugt, um sicherzustellen, daß im Nicht-Begasungsfall die Membran mehr oder weniger dicht ist und die Flüssigkeit nicht in die Belüftungseinrichtung und damit in die Gaszuführleitung eindringen kann.

Die Erfindung zielt deshalb darauf ab, den gaspermeablen Teil der Belüftungseinrichtung so auszubilden, daß möglichst große Flächenabschnitte als Begasungsfläche zur Verfügung stehen und innerhalb dieser Flächenabschnitte möglichst große Bereiche im Begasungsfall elastisch so verformbar sind, daß große Krümmungsradien ausgebildet werden können. Daraus resultiert die weitere Erkenntnis, daß die eigentliche Begasungsfläche vorzugsweise in verschiedene Einzelabschnitte zu unterteilen ist.

In ihrer allgemeinsten Ausführungsform weist die Belüftungseinrichtung die Merkmale des Anspruchs 1 auf.

Während im Stand der Technik (DE-C-3410267) die auf dem Grundkörper angeordnete Membran über die gesamte Fläche mit konstanten Werkstoffeigenschaften und physikalischen Kenndaten ausgebildet ist, zeichnet sich die erfindungsgemäße Belüftungseinrichtung dadurch aus, daß die Abdeckung Abschnitte unterschiedlicher Werkstoffeigenschaften (physikalischer Kennwerte) aufweist. Diese wird insbesondere durch unterschiedliche Elastizitätsmodule in verschiedenen Abschnitten erreicht.

Hierdurch wird folgender Effekt erzielt : Im Begasungsfall bleiben die Abschnitte mit höherem Elastizitätsmodul, also die weniger verformbaren Abschnitte mehr oder weniger formstabil gegenüber dem Nicht-Begasungsfall, während sich die dazwischen angeordneten Abschnitte mit höherem elastischen Verformungsverhalten auf bekannte Art und Weise ausformen können.

Hierdurch wird die Begasungsfläche in zahlreiche Teil-Begasungsflächen untergliedert, die jeweils für sich optimale Begasungsqualitäten liefern.

Die Gestaltung der Abdeckung kann erfindungsgemäß auf verschiedene Art und Weise erfolgen, wobei die weniger verformbaren Abschnitte linien- oder stegartig zwischen den flächigen Abschnitten mit kleinerem Elastizitätsmodul ausgebildet sind. Hierdurch wird erreicht, daß die mehr oder weniger verformungsstabilen Bereiche nur einen geringen Teil der Gesamt-Begasungsfläche ausmachen, wodurch nur unwesentliche Abschnitte der Begasungsfläche verlorengehen.

Selbst diese können aber erfindungsgemäß wiederum mit Gasdurchtrittsöffnungen ausgebildet werden, so daß dann praktisch die gesamte Abdeckung als Begasungsfläche zur Verfügung steht.

Zur Erzielung besonders günstiger Begasungsverhältnisse sollen vor allem bei runden Scheibenbelüftern die weniger verformbaren Abschnitte als im Abstand zueinander angeordnete Ringe gestaltet sein.

Diese Ringe können entweder konzentrisch und im Abstand zueinander verlaufen oder aber auch als Einzelringe im Abstand zueinander ausgebildet sein.

Im ersten Fall werden zwischen den Ringen ringscheibenförmige Abschnitte der Membran ausgebildet, die sich im Begasungsfall wie ein ringförmiger Tunnel verformen. Im letztgenannten Fall haben die elastischeren Abschnitte jeweils eine Kreisringform und führen im Begasungsfall zur Ausbildung von Halbschalen.

Bei allen Ausführungsformen dienen die Abschnitte geringerer Verformbarkeit als randseitige Begrenzungen für die deformierten porösen Zwischenbereiche.

Diese unelastischeren Abschnitte können aus einer Materialqualität höheren spezifischen Gewichtes bestehen. Zum Beispiel können bei einer Abdeckung aus einer Kautschuk-Qualität die unelastischeren Abschnitte dadurch ausgebildet werden, daß sie mit metallischen Teilen armiert werden. Zum Beispiel können nach einer vorteilhaften Ausführungsform der Erfindung Metallringe oder -Stege an den entsprechenden Stellen einvulkanisiert werden.

Noch einfacher ist es aber, wenn die entsprechenden Abschnitte zum Beispiel aus einer Hartgummiqualität bestehen, die die gleiche Funktion erfüllt, während die dazwischen angeordneten elastischeren Abschnitte aus einer leicht deformierbaren Kautschuk-Qualität mit Perforationen gebildet werden. Ebenso kann der Elastizitätsmodul dadurch verändert werden, daß die Bereiche, die sich weniger verformen sollen, in ihrer Materialstärke einfach dicker ausgebildet werden als die übrigen Membranabschnitte.

In den vorgenannten Ausführungsbeispielen kann die Abdeckung als einteilig bezeichnet werden.

Um eine möglichst gleichmäßige Gasverteilung zu erreichen, wird vorzugsweise zwischen dem Grundkörper und der Abdeckung ein Gasverteilraum ausgebildet. Im einfachsten Fall kann dies dadurch erfolgen, daß entweder der Grundkörper schüsselartig ausgebildet wird (dann kann die Abdeckung ohne weiteres als einfache Platte gestaltet werden) oder aber der Grundkörper ist mehr oder weniger flächig und dann wird die Abdeckung korbähnlich ausgebildet, wobei die Abdeckung mit ihrem Öffnungsrand nach unten in Richtung auf den Grundkörper weist und an diesem befestigt wird.

Die Gaszuführeinrichtung wird dabei vorzugsweise mittig angeordnet, um eine allseits gleichmäßige Gasverteilung zu erreichen. Selbstverständlich können aber auch mehrere Gaszuführeinrichtungen über die Begasungsfläche verteilt angeordnet werden.

Die mit der Belüftungseinrichtung erzielbaren Vorteile sind offensichtlich. Durch eine Unterteilung der Belüftungsfläche werden eine Vielzahl vereinzelter Belüftungsabschnitte ausgebildet, die jeweils optimierte Belüftungseigenschaften aufweisen, insbesondere jeweils mit einem Abschnitt großen Krümmungsradiusses ausgebildet sind.

Es steht praktisch die gesamte Begasungsfläche zur Begasung zur Verfügung und Totflächen entfallen weitestgehend.

Bekannte Belüftungseinrichtungen können jederzeit einfach nachgerüstet werden, indem lediglich die Abdeckung (Membran) ausgetauscht wird.

Jegliche Art von Begrenzungsvorrichtungen etc. entfällt.

Die Erfindung wird nachstehend anhand eines Ausführungsbeispiels näher beschrieben, wobei die zeichnerische Schnittdarstellung (Längsschnitt) stark schematisiert sind.

Die Belüftungseinrichtung besteht aus einem tellerförmigen Grundkörper 10, dessen kreisförmiger Deckel 12 mittig eine Durchlaßöffnung 14 aufweist, von der aus nach unten ein Gaszuführrohr 16 verläuft. Der Grundkörper 10 und seine Teile bestehen aus einem glasfaserverstärkten Kunststoff.

Oberhalb des Deckels 12 verläuft eine Abdeckung 18, die hier als Membran mit Perforationen ausgebildet ist.

Die Membran 18 ist randseitig um die Umfangsfläche 20 herumgezogen und wird dort mittels eines Schellenbandes 22 am Grundkörper 10 festgelegt.

Wie der zeichnerischen Darstellung zu entnehmen ist, verläuft im Bereich der Membran 18 ein ringförmiger Steg 24, der eine größere Materialstärke aufweist als die Membran 18. Während die Membran 18 aus einem stark elastischen Kautschukmaterial besteht, wird der ringförmige Steg 24 von einem in die Membran 18 eingearbeiteten Hartgummi gebildet. Anstelle eines Steges können auch mehrere Stege oder eine andere Konfiguration der Verbindungselemente angewandt beziehungsweise gewählt werden. Ebenso ist es möglich, den Steg aus demselben Material wie die übrigen Teile der Abdeckung, also ebenfalls aus einem Kautschuk auszubilden, jedoch — wie dargestellt — dicker gegenüber den Membranabschnitten. Allein aufgrund der Materialverdickung und fehlender Perforation ergibt sich so ein höherer Elastizitätsmodul des Steges 24 gegenüber der Membran 18.

Im Nicht-Begasungszustand weist die Membran 18 gegenüber dem Grundkörper 10 die mit I gekennzeichnete Position auf. Dabei besteht zwischen der Membran 18 und dem Deckel 12 des Grundkörpers 10 ein kleiner Belüftungsraum 26.

Wird nun über das Gaszuführrohr 16 und die Durchlaßöffnung 14 ein Gas, zum Beispiel Sauerstoff, unter Druck in den Belüftungsraum 26 eingedüst, so kommt es zu einer Verformung der elastischen Abschnitte 18′, 18″ der Membran 18, wobei sich der ringförmige Abschnitt 18′ der Membran 18 wie ein ringförmiger Tunnel nach oben ausformt, während gleichzeitig der kreisförmige Abschnitt 18″ der Membran 18 eine Halbkugelform annimmt.

Aufgrund der weitestgehend unelastischen Eigenschaften des Steges (Hartgummirings) 24 wird dieser praktisch nicht verformt und behält auch im Begasungszustand, der durch die Ziffer II gekennzeichnet ist, im wesentlichen seine ursprüngliche Form.

Der linienführung der Membran 18′, 18″ gemäß II ist zu entnehmen, daß große Bereiche der Membran einen starken Krümmungsradius aufweisen, der für eine optimale und gleichmäßige Begasung sorgt.

Der dargestellte Belüfter wird zum Beispiel zur Frischhaltebelüftung eines Abwassers eingesetzt und dort am Boden des Abwasserbehälters angeordnet, so daß der durch die Perforationen der Membran 18, 18′, 18″ austretende Sauerstoffstrom nach oben in die Flüssigkeit austreten kann.

Ohne die Ausbildung des im wesentlichen unelastischen ringförmigen Steges 24 würde es zu einer einzigen, glockenförmigen Verformung der Membran 18 kommen und damit nur zu einem geringen Flächenabschnitt großer Krümmung etwa in der Mitte oberhalb der Durchlaßöffnung 14.

Es ist offensichtlich, daß durch die Ausbildung der Membran mit elastischen und unelastischen beziehungsweise mehr oder weniger elastischen Abschnitten eine Aufteilung des Gasstromes im Sinne einer optimierten Gaszuführung in die Flüssigkeit erreicht werden kann.

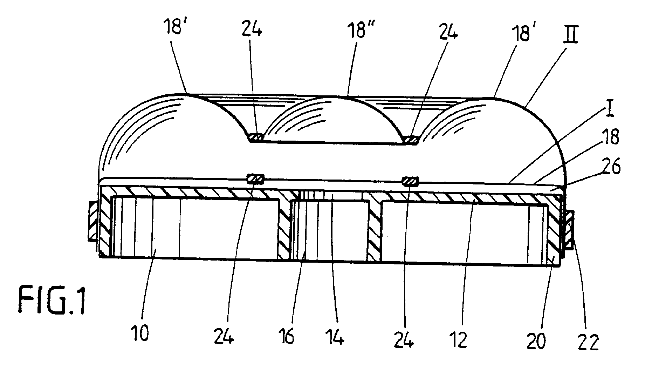

**Patentansprüche**

1. Belüftungseinrichtung zum Eindüsen eines Gases in eine Flüssigkeit mit einem Grundkörper (10), einer am Grundkörper (10) festgelegten Abdeckung (18), die in Abschnitte (18′, 18″..., 24) mit hohem elastischen Verformungsverhalten und in Abschnitte (18′, 18″...) mit geringem elastischem Verformungsverhalten unterteilt ist, die Durchtrittsöffnungen für das Gas aufweisen, sowie mindestens einer Gaszuführeinrichtung (16) in den Bereich (26) zwischen Grundkörper (10) und Abdeckung (18), wobei sich die Abschnitte mit geringerem elastischem Verformungsverhalten steg- oder linienartig zwischen flächigen Abschnitten mit hohem elastischen Verformungsverhalten erstrecken und wobei sich im Betrieb die Abschnitte mit hohem elastischem Verformungsverhalten gegenüber den Abschnitten mit geringem elastischem Verformungsverhalten aufwölben, dadurch gekennzeichnet, daß die Abdeckung (18) einteilig ist und die Abschnitte (24) mit geringem elastischem Verformungsverhalten entweder aus einer Materialqualität höheren spezifischen Gewichts oder aus demselben Material wie die übrigen Abschnitte (18′, 18″, 18‴) bestehen, jedoch gegenüber diesen dicker ausgebildet sind oder aus demselben Material wie die übrigen Abschnitte bestehen und eine Armierung aus einem weniger verformbaren Werkstoff aufweisen.

2. Belüftungseinrichtung nach Anspruch 1, bei der die Abschnitte mit geringem elastischem Verformungsverhalten eine Metall-, Kunststoff- und/oder Faserarmierung aufweisen.

3. Belüftungseinrichtung nach Anspruch 1 oder 2, bei der die Abschnitte mit geringem elastischem Verformungsverhalten als im Abstand zueinander verlaufende, konzentrische Ringe gestaltet sind.

4. Belüftungseinrichtung nach einem der Ansprüche 1 bis 3, bei der der Grundkörper (10) aus Metall oder Kunststoff, vorzugsweise einem Duroplast, besteht.

**Claims**

1. Aeration installation for introducing a gas into a liquid with a foundation (10), a cover (18) attached to the foundation (10), the cover (18) being divided into sections (18′, 18″..., 24) of high elastic deformation rates and into sections (18′, 18″...) with less elastic deformation rates, presenting openings for the gas and at least one gas supply means (16) into the area (26) between foundation (10) and cover (18), in which the sections with less elastic deformation rates extend linearly or are staggered between the surface sections with high deformability and wherein the sections with high elastic deformation rates curve with respect to sections with less deformation rates, characterized in that the cover (18) is a one piece cover and that said sections (24) with less elastic deformation rates are made either of a material of higher specific weight or of the same material as the other sections (18′, 18″, 18‴), but thicker than these or of the same material as the other sections and including a reinforcement of a less deformable quality.

2. Aearation installation according to Claim 1 in which the sections with less elastic deformation rates have a metal, plastic and/or fiber reinforcement.

3. Aeration installation according to Claim 1 or 2 in which the sections with less elastic deformation rates are constructed as concentric rings running at an interval from one another.

4. Aeration installation according to one of Claims 1 through 3 with a fixed foundation (10) of metal or plastic, preferably a duroplast.

**Revendications**

1. Dispositif d'aération, pour injecter un gaz dans un liquide, avec un corps de base (10), un recouvrement (18), fixé au corps de base (10) et subdivisé en sections (18', 18"..., 24) à comportement en déformation très élastique et en sections (18', 18",...) à comportement en déformation peu élastique, qui présentent des ouvertures de passage pour le gaz, ainsi qu'au moins un dispositif d'amenée de gaz (16), dans la zone (26) située entre corps de base (10) et recouvrement (18), où les sections à comportement en déformation peu élastique s'étendent à la façon de nervures ou de lignes, entre des sections plates à comportement en déformation très élastique, et où, en fonctionnement, les sections à comportement en déformation très élastique se bombent, par rapport aux sections à comportement en déformation peu élastique, caractérisé en ce que le recouvrement (18) est formé d'un seul tenant et les sections (24) à comportement en déformation peu élastique sont composées soit en une qualité de matériau à poids spécifique élevé, soit dans le même matériau que le reste des sections (18', 18", 18'''), mais en étant plus épaisses que celles-ci, soit dans le même matériau que le reste des sections et en comportant une armature composée d'un matériau mois déformable.

2. Dispositif d'aération selon la revendication 1, dans lequel les sections à comportement en déformation peu élastique comportent une armature en métal, matière synthétique et/ou fibres.

3. Dispositif d'aération selon la revendication 1 ou 2, dans lequel les sections à comportement en déformation peu élastique sont réalisées sous forme d'anneaux concentriques, s'étendant à distance les uns des autres.

4. Dispositif d'aération selon l'une des revendications 1 à 3, dans lequel le corps de base (10) est en métal ou en matière synthétique, de préférence en une matière synthétique thermodurcissable.

FIG.1